(19) Europäisches Patentamt
European Patent Office
Office européen des brevets

(11) **EP 3 017 258 B1**

(12) **EUROPÄISCHE PATENTSCHRIFT**

(45) Veröffentlichungstag und Bekanntmachung des Hinweises auf die Patenterteilung:
**07.08.2019   Patentblatt 2019/32**

(21) Anmeldenummer: **14734778.5**

(22) Anmeldetag: **24.06.2014**

(51) Int Cl.:
*F27B 3/08* *(2006.01)*    *F27B 3/20* *(2006.01)*
*F27B 3/28* *(2006.01)*    *F27D 27/00* *(2010.01)*
*H05B 7/18* *(2006.01)*    *H05B 7/20* *(2006.01)*
*C21C 5/52* *(2006.01)*

(86) Internationale Anmeldenummer:
**PCT/EP2014/063283**

(87) Internationale Veröffentlichungsnummer:
**WO 2015/000745 (08.01.2015 Gazette 2015/01)**

(54) **VERFAHREN ZUM BETREIBEN EINES LICHTBOGENOFENS UND LICHTBOGENOFEN**

METHOD FOR OPERATING AN ARC FURNACE AND ARC FURNACE

PROCÉDÉ POUR PILOTER UN FOUR À ARC ET FOUR À ARC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.07.2013   EP 13175076**

(43) Veröffentlichungstag der Anmeldung:
**11.05.2016   Patentblatt 2016/19**

(73) Patentinhaber: **Primetals Technologies Austria GmbH**
**4031 Linz (AT)**

(72) Erfinder:
• ENGELS, Ralf
  91336 Heroldsbach (DE)
• DORNDORF, Markus
  76534 Baden-Baden (DE)
• KRÜGER, Klaus
  83416 Sealdorf-Surheim (DE)
• HEIN, Michel
  F-67170 Brumath (FR)
• NARDACCHIONE, Domenico
  77652 Offenburg (DE)

(56) Entgegenhaltungen:
DE-A1- 3 035 508      DE-A1-102008 006 965
GB-A- 1 585 195

**Beschreibung**

Die Erfindung betrifft ein Verfahren zum Betreiben eines Lichtbogenofens und einen Lichtbogenofen.

Ein Elektro-Lichtbogenofen ist ein Aggregat zum Schmelzen und Recycling von Stahlschrott. Entsprechend der vielfältigen Anwendungsgebiete von Stahl kommt in einem derartigen Lichtbogenofen ein breites Spektrum an Schrott zum Einsatz. Der Schrott kann dabei dem Lichtbogenofen in Form von Spänen und dünnen Drähten bis hin zu schweren Trägern oder gar Bären mit mehreren Tonnen Gewicht zugeführt werden.

Beim herkömmlichen Lichtbogenofen wird der Schrott zu Beginn des Schmelzprozesses als loses Haufwerk in den Lichtbogenofen chargiert. Dieses Haufwerk kann von einem oder mehreren Lichtbögen sehr effizient eingeschmolzen werden, da das Haufwerk die Lichtbögen umgibt und so die Strahlungsenergie aufnimmt.

In der Einschmelzphase ist dabei ein weiträumiges Einschmelzen des Schrotts erwünscht. Sobald nämlich die Umgebung der Elektroden freigeschmolzen wurde, steigt die Gefahr von turbulenten Schrotteinstürzen, wobei Schrott in Richtung der Elektroden nachrutscht und einen Elektrodenbruch verursachen kann. Aus diesem Grund werden moderne Elektro-Lichtbogenöfen in der Einschmelzphase mit einer möglichst hohen Sekundärspannung (heute typisch: bis 1200V) betrieben, wodurch sich lange Lichtbögen ausbilden und eine weiträumige Einschmelzung des Schrotts im Einflussbereich der langen Lichtbögen erreicht wird. Es wird eine Schmelzzeitverkürzung erzielt und das Risiko für Elektrodenbrüche wird vermindert.

Bei älteren Elektro-Lichtbogenöfen, deren Ofentransformatoren im Vergleich zu modernen Anlagen eher kleine Spannungsstufen besitzen (typisch für ältere Anlagen: max. 800V Sekundärspannung), ist ein solches weiträumiges Einschmelzen von Schrott auf herkömmliche Weise nicht realisierbar.

Nach dem Niederschmelzen von Teilen des Schrotts liegt ein flüssiges Bad geschmolzenen Stahls vor, in welchem sich typischerweise noch zahlreiche größere noch zu schmelzende Schrottstücke befinden können. Diese werden von dem/den Lichtbogen/Lichtbögen nicht mehr direkt erreicht. So können sie im Wesentlichen nur noch über Konvektion vom angrenzenden flüssigen Bad aufgeschmolzen werden. Da die Temperatur des Schmelzbades nur wenig oberhalb der Liquidustemperatur liegt und die Badbewegung gering ist, benötigt dieses Aufschmelzen relativ viel Zeit.

Insbesondere bei sehr großen Schrottstücken erhöht sich die erforderliche Prozesszeit, so dass die Effizienz des Schmelzprozesses sinkt. Es besteht das Risiko, dass einzelne Schrottstücke bis zum Abstich noch nicht vollständig aufgeschmolzen sind, im schlimmsten Fall verstopfen sie die Abstichöffnung.

Neben den herkömmlichen Lichtbogenöfen mit korbweiser Chargierung tritt das beschriebene Phänomen auch bei Lichtbogenöfen auf, bei denen die Chargierung über einen Schacht oder kontinuierlich erfolgt. Gegebenenfalls ist der Effekt sogar verstärkt, da das gesamte Einsatzgut in einen begrenzten Sektor des Ofengefäßes eingebracht wird. Dieser Sektor stellt eine prädestinierte kalte Stelle dar.

Es ist daher Aufgabe der vorliegenden Erfindung ein Verfahren zum Betreiben eines Lichtbogenofens sowie einen Lichtbogenofen anzugeben, bei dem diese Nachteile vermieden werden und der Einschmelzprozess von zu schmelzendem Stahl verbessert wird.

Erfindungsgemäß wird die erstgenannte Aufgabe gelöst durch ein Verfahren zum Betreiben eines Lichtbogenofens mit den Merkmalen des Patentanspruches 1. Demnach erfolgt beim Betrieb eines Lichtbogenofens mit drei Elektroden zur Erzeugung eines Lichtbogens eine Oszillation des Sollwertes des der Elektrode zugeführten Stromes um einen vorgegebenen Basiswert.

Dabei wird im Sinne der Erfindung als "Oszillation" hier sowohl eine Änderung des Sollwertes des der Elektrode zugeführten Stromes ausgehend von dem vorgegebenen Basiswert und wieder zurück zu dem Basiswert wie auch eine periodische Änderung des Sollwertes des der Elektrode zugeführten Stromes um den vorgegebenen Basiswert verstanden.

Eine derartige Oszillation bzw. Vertrimmung des Sollwertes des der Elektrode zugeführten Stromes ermöglicht eine Beeinflussung der Lichtbogenlänge an der Elektrode. Eine gezielte Verlängerung des Lichtbogens an einer Elektrode, bei gleichzeitiger Verkürzung der Lichtbögen an den ggf. weiteren vorhandenen Elektroden, führt im Einschmelzbetrieb - bei geeigneter alternierender Ansteuerung - zu erhöhten umlaufenden Strahlungsleistung. Insbesondere auch bei älteren Anlagen lässt sich so ein weiträumiges Einschmelzen des Schrotts trotz geringer vorhandener Sekundärspannung des Ofentransformators erreichen.

Dadurch wird eine Verkürzung der Einschmelzzeiten und eine Verminderung der Gefahr von Schrotteinstürzen erreicht.

Sobald ein Schmelzbad gebildet wurde, kann mittels eines derart betriebenen Lichtbogenofens weiterhin eine geeignete Badbewegung erzeugt werden, welche den konvektiven Wärmeübergang deutlich verbessert, so dass ein homogenes und schnelles Aufschmelzen des Schrottes erreicht wird.

So ist das erfindungsgemäße Verfahren über den gesamten Einschmelzvorgang von Vorteil, beginnend mit einem Vorliegen von Schrott im Ofen über ein Vorliegen von Schmelzbad und Schrott bis hin zu vollständigen Auflösung des Schrotts im Schmelzbad.

Dabei hat es sich für das Verfahren bewährt, wenn die Oszillation periodisch erfolgt. Bei mehreren Elektroden lässt sich damit ein Wandern des verlängerten Lichtbogens von einer Elektrode zur nächsten erzielen. Insbesondere beträgt dabei die Periodenfrequenz f in der Schrotteinschmelzphase 0,05Hz bis 0,2Hz.

Eine längerte Verweilzeit mit verlängertem Lichtbogen in Bereichen des Ofens mit besonders großen Schrottteilen ist möglich, wobei die übrigen Bereiche mit kleineren, schneller aufschmelzbaren Schrottteilen schneller durchfahren werden. Dadurch lässt sich eine Vergleichmäßigung im Temperaturprofil des Ofens und damit wiederum ein gleichmäßigeres und schnelleres Einschmelzen erreichen. Die Verweilzeit in einem bestimmten Bereich des Ofenraums wird dabei insbesondere abhängig von der Anzahl der gezählten Kurzschlüsse seit Beginn der Schmelzphase und/oder der bereits erreichten mittleren Strahlungsverteilung des Schmelzbads und/oder der aktuellen thermischen Wandbelastung der Kühlelemente ermittelt.

Der Lichtbogenofen umfasst drei Elektroden und die jeweiligen Ströme weisen eine Phasenverschiebung von 120° auf.

Durch die Oszillation des Sollwertes des Stromes I nacheinander an jeder der drei Elektroden wird gezielt an der jeweils von der Oszillation betroffenen Elektrode ein längerer Lichtbogen und an den nicht betroffenen Elektroden ein demgegenüber kürzerer Lichtbogen erzeugt wird. Dies erfolgt insbesondere durch eine Impedanz-Vertrimmung auf die (meist symmetrischen) Impedanz-Soll-Arbeitspunkte der Elektrodenregelung. Dadurch wird ein Sternpunkt des 3-Leiter-Sekundärspannungssystems so verschoben, dass eine bestimmte Phase auf Kosten der Spannung einer anderen Phasenspannung, eine bis zu 1,5 fache Spannungserhöhung erfährt.

Zur mathematischen Beschreibung des Effekts wird nachfolgend der sogenannte Strahlungsindex RE einer Elektrode eingeführt.

$$RE = U_{arc} * P_{arc}$$

mit $U_{arc}$ = Spannung an der Elektrode
und $P_{arc}$ = Leistung der Elektrode

Durch den Strahlungsindex lässt sich die Lichtbogenlänge und dessen Schmelzwirkung in ein vereinfachtes Modell abbilden. Dabei entspricht eine Erhöhung des Strahlungsindex vereinfacht einer Lichtbogenverlängerung. Die notwendige Impedanz-Vertrimmung zur Erhöhung des Strahlungsindex an einer Elektrode ist dabei Drehfeld-abhängig. Dabei können die ImpedanzSollwerte so verstellt werden, dass die Erhöhung des Strahlungsindex an einer Elektrode durch eine symmetrische, also jeweils gleiche Absenkung an den anderen Elektroden erzielt wird.

Ein Beispiel für eine symmetrische Strahlungserhöhung wäre also:

$$RE\ (Elektrode\ 1) = 120\ \%$$

$$RE\ (Elektrode\ 2) = 90\ \%$$

$$RE\ (Elektrode\ 3) = 90\ \%$$

Dabei wäre der Lichtbogen an Elektrode 1 verlängert und die Lichtbögen an den Elektroden 2 und 3 verkürzt, und zwar auf das gleiche Maß verkürzt.

Eine derartige Strahlungsindex-Vertrimmung wird in der anfänglichen Einschmelzphase auf maximal 20% begrenzt. Messungen haben ergeben, dass eine Impedanz-Vertrimmung von 15% eine etwa 20%-ige Strahlungserhöhung an der Elektrode mit verlängertem Lichtbogen bewirkt. Darüber hinausgehende Vertrimmungen haben eine Verminderung des Gesamtleistungseintrags in den Ofen zur Folge. Die Vorgabe einer Höhe der Strahlungsdynamik kann dabei sinnvoll erfolgen durch eine Strahlungsindex-Vorgabe im jeweiligen Schritt eines Ofenfahrprogramms und/oder abhängig von einer aktuellen Trafostufe und/oder einer aktuelle Kurvennummer und/oder einer Auswertung der Oberwellen. Unter einer "Kurvennummer" wird dabei ein bestimmter Arbeitspunkt einer Trafostufe verstanden, wobei für eine Trafostufe unterschiedliche Arbeitspunkte einstellbar sind. Dabei kann eine feste Zuordnung von bestimmten Kurvennummern einer Trafostufe zu einem Fahrprogramm erfolgen, bei dem eine Strahlungsindex-Vertrimmung vorgenommen wird bzw. keine Strahlungsindex-Vertrimmung vorgenommen wird.

Die drei Elektroden sind in Richtung ihrer Längsachsen gesehen auf einer Kreislinie angeordnet und der längere Lichtbogen im Lichtbogenofen umläuft einen von der Kreislinie umschlossenen Bereich wiederkehrend. Dies lässt sich durch zyklisches Tauschen des Vertrimmungsmusters in den drei Phasen erreichen, wobei nacheinander jede Elektrode eine Strahlungserhöhung durchläuft. Es entsteht ein länger Lichtbogen, der von Elektrode zu Elektrode wandert und somit quasi um das Elektrodenpaket herumläuft.

Bevorzugt ist in dem Lichtbogenofen demnach Schrott vorhanden und über die Oszillation des Sollwertes des Stromes I wird gezielt eine Vergrößerung einer von den Lichtbögen erzeugten Strahlungsleistung erreicht.

Weiterhin ist in dem Lichtbogenofen bevorzugt ein Schmelzbad vorhanden und über die Oszillation des Sollwertes des Stromes I wird gezielt eine Bewegung des Schmelzbades in dem Lichtbogenofen erzeugt. Dabei wird insbesondere gezielt eine die mindestens eine Elektrode - in Richtung deren Längsachse gesehen - umlaufende Bewegung des Schmelzbades erzeugt. Diese Rührbewegung unterstützt den Einschmelzvorgang signifikant.

Dies beruht dabei auf den folgenden Erkenntnissen:
Der durch die Elektrode des Lichtbogenofens erzeugte Lichtbogen stellt einen Plasmajet da, der einen Impuls aufweist. Dieser Impuls wirkt auf das flüssige Stahlbad, wodurch eine Badeindrückung und damit eine Badbewegung bewirkt werden. Die Kraftwirkung F steigt dabei überproportional mit dem Effektivwert des Lichtbogenstroms, also mit dem der Elektrode zugeführten Stroms I an. Dabei ist die Kraft F proportional $I^2$.

Durch eine Oszillation des Sollwertes des der Elektrode zugeführten Stromes I um einen vorgegebenen Basiswert und damit gezielt auch des Effektivwerts des Lichtbogenstroms wird nun die Badoberfläche in Schwingungen versetzt. Durch diese Schwingungen kann eine geeignete Badbewegung erzeugt werden, wodurch die konvektive Wärmeübertragung verbessert wird. Eine geeignete Badbewegung kann vorzugsweise erzeugt werden, indem die Oszillation periodisch, insbesondere mit einer Periodenfrequenz zwischen 0,2Hz und 2Hz, erfolgt.

Eine weitere Verbesserung der konvektiven Wärmeübertragung erfolgt bei einem Drehstromlichtbogenofen, welcher drei insbesondere im Dreieck angeordnete Elektroden beziehungsweise Lichtbögen umfasst zusätzlich zur Wahl einer geeigneten Periodenfrequenz auch durch eine geeignete Phasenlage der jeweiligen den Elektroden zugeführten Strömen.

Bei Betrieb eines herkömmlichen Drehstromlichtbogenofens brennen bei einem flüssigen Bad die Lichtbögen sehr stabil auf der Badoberfläche. Es treten bei dieser Betriebsweise kaum Schwankungen der Effektivwerte der den Elektroden zugeführten Ströme auf. Bedingt durch die 100Hz (doppelte Netzfrequenz) Rotation der Lichtbögen kann eine leichte Badbewegung angeregt werden. Dieser durch die Phasenverschiebung der einzelnen Ströme hervorgerufene Effekt kann nun durch den erfindungsgemäßen Betrieb eines Lichtbogenofens zusätzlich zur Erzeugung einer Badbewegung genutzt werden.

Durch die erfindungsgemäße Oszillation der Sollwerte der den Elektroden zugeführten Ströme um einen vorgegebenen Basiswert und durch eine zusätzliche Phasenverschiebung der einzelnen Ströme der jeweiligen Elektroden kann eine gegenüber dem herkömmlichen Betrieb eines Lichtbogenofens verstärkte Rotation und somit Bewegung des Bades erzielt werden. Die einzelnen Ströme der jeweiligen Elektroden weisen dann beispielsweise die folgende Form auf:

$$I = I_0 + \Delta I * \sin(2\pi ft + \varphi).$$

Dabei ist I der Effektivwert des einer Elektrode zugeführte Stroms, welcher sich aus einem Basiswert $I_0$ und einem oszillierenden Anteil $\Delta I * \sin(2\pi ft + \varphi)$ zusammensetzt. $\varphi$ ist der Phasenwinkel, wobei bei einem Drehstromlichtbogenofen die jeweiligen Ströme eine Phasenverschiebung von 120° aufweisen.

Die Oszillation des Stromes und damit die Bewegungen des Stahlbades um den Basiswert kann somit durch Veränderung der Amplitude $\Delta I$ und/oder der Periodenfrequenz f des Stromes erfolgen. Mit anderen Worten können die Amplitude $\Delta I$ und Periodenfrequenz f auch während eines Schmelzprozesses geändert werden, um eine gewünschte Badbewegung zu erzeugen. Insbesondere kann bei einem Beginn des Schmelzprozess und einer beginnenden Badbewegung die Periodenfrequenz während eines Zeitabschnitts gesteigert werden. Um also eine Badbewegung beginnen zu lassen wird mit einer niedrigen Periodenfrequenz f begonnen, die dann mit zunehmender Badbewegung gesteigert wird, was wiederum zu einer erneut zunehmenden Badbewegung führt. Die Periodenfrequenz f wird dabei anhand der Trägheit bzw. Masse des Stahlbades gewählt. Die Erhöhung der Periodenfrequenz f in dem betrachteten Zeitabschnitt erfolgt bevorzugt derart, dass eine Badbewegung maximiert wird. Nach dem betrachteten Zeitabschnitt kann dann die Periodenfrequenz f wieder konstant gehalten werden.

Wird für die Oszillation eine geeignete Periodenfrequenz f von 0,2Hz bis 2Hz gewählt, so bildet sich im Ofengefäß eine umlaufende Welle aus. Entsprechende Frequenzen werden, abhängig vom Gefäß und Teilkreisdurchmesser, im Bereich von unter 1Hz liegen. Die resultierende, definiert einstellbare Badbewegung führt zum gewünschten guten konvektiven Wärmeübergang. Die Ausbildung der Welle kann insbesondere durch einen Anstieg der Periodenfrequenz f der den einzelnen Elektroden zugeführten Ströme beim anfänglichen Erzeugen der Badbewegung begünstigt werden. Die jeweiligen Periodenfrequenzen f der Ströme und damit die Umlauffrequenz der umlaufenden Welle im Stahlbad wird somit derart erhöht, dass die Rotationsgeschwindigkeitszunahme des Stahlbades, also dessen Beschleunigung maximal wird.

Insgesamt ergibt sich durch die gezielte Oszillation der Sollwerte und in Folge der Effektivwerte des Stromes und einer geeigneten Umlauffrequenz eine erzwungene Rotation des Stahlbades und eine damit einhergehende bessere Durchmischung beziehungsweise Temperaturvergleichmäßigung des Stahlbades. Speziell bei exzentrisch zugeführter elektrischer Energie und/oder Schmelzgutzugabe und einem damit verbundenen ungleichmäßigen Energieeintrag beziehungsweise einer exzentrischen Schmelzgutverteilung ergibt sich eine bessere Verteilung beziehungsweise Zuführung der Energie zum Schmelzgut. Daraus ergeben sich kürzere Prozesszeiten beziehungsweise die Sicherstellung der Chargier- und Vorwärmzeiten bei Schachtöfen.

Das erfindungsgemäße Verfahren lässt sich auch bei einem Gleichstromlichtbogenofen anwenden. Dieser verfügt meist nur über eine, in wenigen Ausnahmefällen über zwei Elektroden. Durch definierte Variation des Sollwertes und damit des Effektivwertes des der Elektrode zugeführten Stromes erreicht man eine vom Zentrum des Ofengefäßes nach außen laufende Welle. Auch hierdurch wird der konvektive Wärmeübergang verbessert.

Das beschriebene Verfahren ist sowohl für herkömmliche Lichtbogenöfen als auch für Schachtöfen anwendbar.

Erfindungsgemäß wird die zweitgenannte Aufgabe gelöst durch einen Lichtbogenofen mit den Merkmalen des Patentanspruches 9. Ein derartiger Lichtbogenofen weist drei Elektroden zur Erzeugung eines Lichtbogens und eine Steuer-/ Regeleinheit auf, in der eine Software zur Durchführung des erfindungsgemäßen Verfahrens implementiert ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Für eine weitere Beschreibung der Erfindung wird auf die Ausführungsbeispiele der Zeichnungen verwiesen. Es zeigt in einer schematischen Prinzipskizze:

FIG 1      eine schematische Schnittdarstellung eines Lichtbogenofens, und

FIG 2      ein Diagramm mit dem Effektivwert bzw. Sollwert eines einer Elektrode zugeführten Stromes über der Zeit.

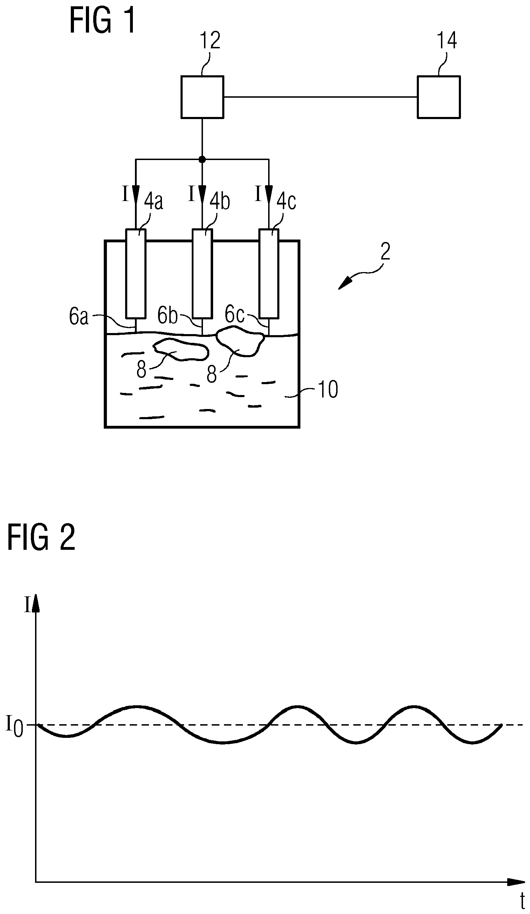

FIG 1 zeigt einen Lichtbogenofen 2 mit in diesem Fall drei Elektroden 4a, 4b, 4c zur Erzeugung eines Lichtbogens 6a, 6b, 6c zum Schmelzen von Schrottteilen 8 aus Stahl. Die drei Elektroden 4a, 4b, 4c sind dabei im Dreieck angeordnet. Während des Betriebs des Lichtbogenofens 2 werden die Schrottteile 8 eingeschmolzen, so dass sich ein Schmelzbad 10 bildet. Durch Verlängerung der Lichtbögen 6a, 6b, 6c nacheinander an jeder der drei Elektroden 4a, 4b, 4c (bei gleichzeitiger Verkürzung der Lichtbögen an den anderen beiden Elektroden) wird - in Richtung der Längsachsen der Elektroden gesehen - ein umlaufender verlängerter Lichtbogen erzeugt, wodurch ein weiträumigeres Einschmelzen des Schrotts ermöglicht wird.

Im gebildeten Schmelzbad 10 befinden sich nach einer gewissen Betriebsdauer des Lichtbogenofens 2 typischerweise noch zahlreiche größere noch zu schmelzende Schrottstücke 8. Diese werden von den Lichtbögen 6a, 6b, 6c nicht mehr erreicht. Sie können somit im Wesentlichen nur durch Konvektion vom angrenzenden flüssigen Schmelzbad 10 aufgeschmolzen werden. Die einzelnen Elektroden 4a, 4b, 4c sind jeweils an eine Stromquelle 12 angeschlossen, mit deren Hilfe den Elektroden 4a, 4b, 4c ein Strom I zugeführt wird.

Um nun ein weiteres Aufschmelzen der in dem flüssigen Schmelzbad 10 befindlichen Schrottteile 8 zu gewährleisten, wird der den Elektroden 4a, 4b, 4c zugeführte Strom I weiterhin mittels einer Steuer-/Regeleinheit 14 derart verändert, dass eine Oszillation des Sollwertes des den Elektroden 4a, 4b, 4c zugeführten Stromes I um einen vorgegebenen Basiswert $I_0$ erfolgt. Dies wird erreicht, indem zunächst die Stromsollwerte bzw. die Impedanzsollwerte der entsprechenden Elektroden 4a, 4b, 4c bzw. Lichtbögen 6a, 6b, 6c variiert werden. Der zeitliche Verlauf des Sollwertes des beispielsweise der Elektrode 4a zugeführten Stromes I ist in FIG 2 über der Zeit t dargestellt. Wie zu erkennen ist, oszilliert der Effektivwert des Stromes I periodisch beispielsweise mit einer Frequenz von 1Hz periodisch, in diesem Falle sinusförmig um den vorgegebenen Basiswert $I_0$. Der Effektivwert des Stromes bleibt also nicht konstant, sondern schwankt um den vorgegebenen Basiswert $I_0$. Durch eine derartige Oszillation des Stromes I wird eine Bewegung des Schmelzbades 10 angeregt, so dass die Konvektion verbessert wird. Ein Strom I weist somit folgende Form auf:

$$I = I_0 + \Delta I * \sin(2\pi ft + \varphi).$$

Die Badbewegung kann über die Frequenz f und die Amplitude $\Delta I$ gesteuert werden. In gezeigtem Beispiel beträgt der Phasenwinkel $\varphi = 0°$. Die weiteren Ströme I der Elektroden 4b bzw. 4c sind um 120° versetzt, so dass der Phasenwinkel des Stromes I der Elektrode 4b 120° und des der Elektrode 4c 240° beträgt. Durch diese Phasenverschiebung wird zusätzlich eine Rotation des Schmelzbades 10 erreicht, so dass die Konvektion weiter verbessert wird und somit die Schrotteile 8 in kürzerer Zeit eingeschmolzen werden können.

Das oben beschriebene Verfahren ist technisch einfach zu realisieren, da dieses mit einem herkömmlichen Lichtbogenofen ohne anlagentechnische Modifikation zu realisieren ist. Es müssen lediglich die Sollwerte für den Effektivwert des einer Elektrode zugeführten Stromes nach dem oben beschriebenen Muster programmtechnisch variiert werden. Hierzu ist in der Steuer-/Regeleinheit 14 eine entsprechende Software zur Durchführung des erfindungsgemäßen Verfahrens implementiert. Anhand einer entsprechenden Sollwertvorgabe wird dann der Istwert des Stromes I durch die Steuer-/Regeleinheit 14 auf den vorgegebenen Wert gesteuert/geregelt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung gemäß den Ansprüchen zu verlassen.

**Patentansprüche**

1.     Verfahren zum Betreiben eines Lichtbogenofens (2) der drei Elektroden (4a, 4b, 4c) umfasst und die jeweiligen Ströme eine Phasenverschiebung von 120° aufweisen, zur Erzeugung eines Lichtbogens (6a, 6b, 6c), bei dem eine Oszillation des Sollwertes des der Elektrode (4a, 4b, 4c) zugeführten Stromes (I)

um einen vorgegebenen Basiswert ($I_0$) erfolgt, wobei über die Oszillation des Sollwertes des Stromes (I) nacheinander an jeder der drei Elektroden (4a, 4b, 4c) gezielt an der jeweils von der Oszillation betroffenen Elektrode (4a, 4b, 4c) ein längerer Lichtbogen und an den nicht betroffenen Elektroden ein demgegenüber kürzerer Lichtbogen erzeugt wird, wobei die drei Elektroden (4a, 4b, 4c) in Richtung ihrer Längsachsen gesehen auf einer Kreislinie angeordnet sind und der längere Lichtbogen im Lichtbogenofen (2) einen von der Kreislinie umschlossenen Bereich wiederkehrend umläuft.

2. Verfahren nach Anspruch 1,
bei dem die Oszillation periodisch erfolgt.

3. Verfahren nach Anspruch 2,
bei dem die Periodenfrequenz (f) 0,2Hz bis 2Hz beträgt.

4. Verfahren nach einem der vorhergehenden Ansprüche,
bei dem die Oszillation des Stromes (I) um den Basiswert ($I_0$) durch Veränderung der Amplitude und/oder der Periodenfrequenz (f) des Stromes (I) erfolgt.

5. Verfahren nach Anspruch 4,
bei dem die Periodenfrequenz (f) während eines Zeitabschnitts gesteigert wird.

6. Verfahren nach einem der Ansprüche 1 bis 5, wobei in dem Lichtbogenofen Schrott vorhanden ist und über die Oszillation des Sollwertes des Stromes (I) gezielt eine Vergrößerung einer von den Lichtbögen erzeugten Strahlungsleistung erreicht wird.

7. Verfahren nach einem der Ansprüche 1 bis 6, wobei in dem Lichtbogenofen (2) ein Schmelzbad (10) vorhanden ist und über die Oszillation des Sollwertes des Stromes (I) gezielt eine Bewegung des Schmelzbades (10) in dem Lichtbogenofen (2) erzeugt wird.

8. Verfahren nach Anspruch 7, wobei gezielt eine die mindestens eine Elektrode (4a, 4b, 4c) in Richtung deren Längsachse gesehen umlaufende Bewegung des Schmelzbades (10) erzeugt wird.

9. Lichtbogenofen (2) mit drei Elektroden (4a, 4b, 4c) zur Erzeugung eines Lichtbogens (6a, 6b, 6c) und einer Steuer-/Regeleinheit (14), in der eine Software zur Durchführung des Verfahrens nach einem der vorstehenden Ansprüche implementiert ist.

**Claims**

1. Method for operating an electric arc furnace (2) which comprises three electrodes (4a, 4b, 4c) and the respective currents have a phase shift of 120°, for generating an electric arc (6a, 6b, 6c), wherein an oscillation of the target value of the current (I) fed to the electrode (4a, 4b, 4c) about a pre-determined base value ($I_0$) takes place, wherein due to the oscillation of the target value of the current (I) one after another at each of the three electrodes (4a, 4b, 4c), a longer electric arc is generated specifically at the respective electrode (4a, 4b, 4c) affected by the oscillation and at the unaffected electrodes, an electric arc that is shorter relative thereto is generated, wherein the three electrodes (4a, 4b, 4c) are arranged, seen in the direction of their longitudinal axes, on a circular line and the longer electric arc in the electric arc furnace (2) circulates recurrently round a region enclosed by the circular line.

2. Method according to claim 1,
wherein the oscillation takes place periodically.

3. Method according to claim 2,
wherein the periodic frequency (f) is 0.2 Hz to 2 Hz.

4. Method according to one of the preceding claims,
wherein the oscillation of the current (I) about the base value ($I_0$) takes place by means of changing the amplitude and/or the periodic frequency (f) of the current (I).

5. Method according to claim 4,
wherein the periodic frequency (f) is increased during a time segment.

6. Method according to one of claims 1 to 5, wherein scrap is present in the electric arc furnace and by means of the oscillation of the target value of the current (I), an increase of a radiation output power generated by the electric arcs is achieved in a targeted manner.

7. Method according to one of claims 1 to 6, wherein a molten bath (10) is present in the electric arc furnace (2) and, by means of the oscillation of the target value of the current (I), a movement of the molten bath (10) in the electric arc furnace (2) is created.

8. Method according to claim 7, wherein a movement of the molten bath (10) circulating round the at least one electrode (4a, 4b, 4c) - seen in the direction of its longitudinal axis - is created in a targeted manner.

9. Electric arc furnace (2) having three electrodes (4a, 4b, 4c) for creating an electric arc (6a, 6b, 6c), and a control/regulating unit (14) in which software for carrying out the method according to one of the preceding claims is implemented.

## Revendications

**1.** Procédé pour faire fonctionner un four à arc électrique (2) qui comprend trois électrodes (4a, 4b, 4c) dont les courants respectifs présentent un décalage de phase de 120°, destinées à produire un arc électrique (6a, 6b, 6c), dans lequel une oscillation de la valeur de consigne du courant (I) amené à l'électrode (4a, 4b, 4c) est effectuée autour d'une valeur de base ($I_0$) prédéterminée, dans lequel, par l'oscillation de la valeur de consigne du courant (I) successivement sur chacune des trois électrodes (4a, 4b, 4c) spécifiquement, un arc électrique plus long est généré sur l'électrode (4a, 4b, 4c) respective concernée par l'oscillation et un arc électrique comparativement plus court est généré sur l'électrode non concernée, dans lequel les trois électrodes (4a, 4b, 4c) sont disposées sur une ligne circulaire, en considérant leurs axes longitudinaux et l'arc électrique plus long dans le four à arc électrique (2) passe de façon répétée dans une zone entourée par la ligne circulaire.

**2.** Procédé selon la revendication 1, dans lequel l'oscillation s'effectue de façon périodique.

**3.** Procédé selon la revendication 2, dans lequel la fréquence de la période (f) est de 0,2 Hz à 2 Hz.

**4.** Procédé selon l'une des revendications précédentes, dans lequel l'oscillation du courant (I) autour de la valeur de base ($I_0$) s'effectue par une variation de l'amplitude et/ou de la fréquence (f) de la période du courant (I).

**5.** Procédé selon la revendication 4, dans lequel la fréquence de la période (f) est augmentée pendant un intervalle de temps.

**6.** Procédé selon l'une des revendications 1 à 5, dans lequel des ferrailles sont présentes dans le four à arc électrique, et, par l'oscillation de la valeur de consigne du courant (I), une augmentation de la puissance de rayonnement produite par l'arc électrique est obtenue spécifiquement.

**7.** Procédé selon l'une des revendications 1 à 6, dans lequel un bain de fusion est présent dans le four à arc électrique (2) et, par l'oscillation de la valeur de consigne du courant (I), un mouvement du bain de fusion (10) dans le four à arc électrique (2) est produit spécifiquement.

**8.** Procédé selon la revendication 7, dans lequel, un mouvement de rotation du bain de fusion (10) est produit spécifiquement, vu dans la direction de l'axe longitudinal de la au moins une électrode (4a, 4b, 4c).

**9.** Four à arc électrique (2) comportant trois électrodes (4a, 4b, 4c) destinées à produire un arc électrique (6a, 6b, 6c) et une unité de commande / régulation (14) dans laquelle un logiciel destiné à exécuter le procédé selon l'une des revendications précédentes est mis en place.

FIG 1

FIG 2